# EUROPÄISCHE PATENTSCHRIFT

(11) **EP 1 085 058 B1**
(45) Veröffentlichungstag und Bekanntmachung des Hinweises auf die Patenterteilung: **14.05.2003**
(21) Anmeldenummer: 00810818.5
(22) Anmeldetag: 12.09.2000
(51) Int. Cl.: C09B 67/00, C09B 29/045, C09B 29/09

(54) **Azofarbstoffmischungen**
Mixtures of azo dyes
Mélanges de colorants azoiques

(30) Priorität: 20.09.1999 EP 99810835
(43) Veröffentlichungstag der Anmeldung: 21.03.2001
(73) Patentinhaber: Ciba Specialty Chemicals Holding Inc., 4057 Basel (CH)
(72) Erfinder: Clément, Antoine, 4058 Basel (CH); Arquint, Alfons, 4058 Basel (CH); Lauk, Urs, 8047 Zürich (CH)

(56) Entgegenhaltungen:
- EP-A- 0 468 380
- EP-A- 0 623 654
- WO-A-83/02452
- DE-A- 4 220 731
- GB-A- 2 319 528
- JP-A- 63 135 578
- PETERS A T ET AL: "5,6-(6,7-)DICHLOROBENZOTHIAZOLYLAZO DYES FOR SYNTHETIC-POLYMER FIBRES" DYES AND PIGMENTS,GB,ELSEVIER APPLIED SCIENCE PUBLISHERS. BARKING, Bd. 18, Nr. 2, Seite 115-123 XP000268097 ISSN: 0143-7208

## Beschreibung

Die vorliegende Erfindung betrifft Mischungen von Azofarbstoffen, ihre Herstellung und ihre Verwendung zum Färben oder Bedrucken von halbsynthetischen oder synthetischen hydrophoben Fasermaterialien.

Azofarbstoffe und ihre Verwendung zum Färben von halbsynthetischen oder synthetischen hydrophoben Fasermaterialien sind bekannt. Es hat sich jedoch gezeigt, dass die bekannten Farbstoffe nicht die ganze Nuancepalette vollständig abdecken. Es besteht daher Bedarf nach neuen Farbstoffen oder Farbstoffmischungen, welche die bis dato fehlenden Nuancen, insbesondere blauchstichige rote Nuancen, ermöglichen.

In der JP-A 63-135578 werden Mischungen von Azofarbstoffen auf Basis von Dichlor-2-aminobenzthlazolen offenbart, die zum Färben des Polyester-Anteils von Polyester/Cellulose-Mischgeweben geeignet sind

A.T. Peters und N.M.A. Gbadamosi beschreiben in Dyes and Pigments 18/2, 115 (1992) den Einfluss von Substituenten auf das Absorptionsmaximum von Azofarbstoffen abgeleitet von 5,6-Dichlor-2-aminobenzthiazol und 6,7-Dichlor-2-aminobenzthiazol.

Es wurde nun überraschenderweise gefunden, dass die erfindungsgemässen Mischungen die oben angegebenen Kriterien weitgehend erfüllen.

Gegenstand der vorliegenden Erfindung ist somit eine Farbstoffmischung enthaltend als Komponente (A) mindestens einen Farbstoff der Formel 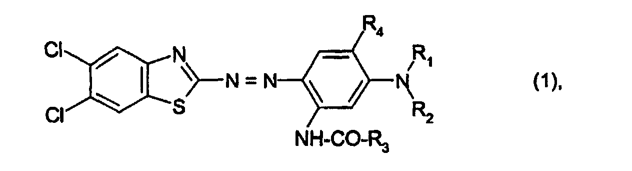 und als Komponente (B) mindestens einen Farbstoff der Formel 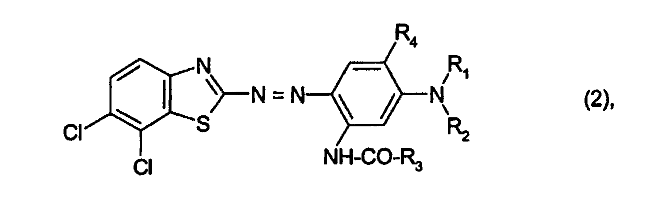 worin R₁ unsubstituiertes oder durch Hydroxy, Cyano, Phenyl, Acyloxy oder 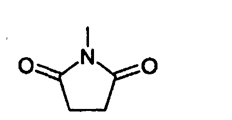 substituiertes C₁-C₆-Alkyl ist, wobei die Alkylkette ab C₃ ein- oder mehrfach mit Sauerstoff unterbrochen werden kann, oder Allyl, ist,
R₂ ein C₁-C₄-Alkyl, welches durch C₁-C₄-Alkoxycarbonyl substituiert ist,
R₃ C₁-C₄-Alkyl ist, und R₄ Wasserstoff, Halogen, C₁-C₄-Alkyl oder C₁-C₄-Alkoxy ist.

R₁ als C₁-C₆-Alkyl ist z.B. Methyl, Ethyl, Propyl, Isopropyl, n-Butyl, iso-Butyl, sec-Butyl, tert-Butyl, Amyl, tert.-Amyl (1,1-Dimethylpropyl), 1,1,3,3-Tetramethylbutyl, Hexyl, 1-Methylpentyl, Neopentyl, Cyclopentyl, Cyclohexyl, sowie die dazugehörenden Isomeren.

R₂, R₃ und R₄ als C₁-C₄-Alkyl sind Methyl, Ethyl, Propyl, Isopropyl, n-Butyl, iso-Butyl, sec-Butyl oder tert-Butyl.

R₂ als C₁-C₄-Alkoxycarbonyl ist z.B. Methoxycarbonyl, Ethoxycarbonyl, Propoxycarbonyl oder Butoxycarbonyl.

R₄ als C₁-C₄-Alkoxy ist z.B. Methoxy, Ethoxy, Propoxy oder Butoxy.
R₄ als Halogen ist Fluor, Brom, Jod und vorzugsweise Chlor.

R₁ bedeutet bevorzugt Methyl, unsubstituiertes oder durch Cyano, Hydroxy oder Acyloxy substituiertes Ethyl, Allyl, Cyclohexyl oder Benzyl.

R₂ bedeutet bevorzugt einen Rest der Formeln -CH₂-COOCH₃, -CH₂-COOCH₂CH₃, -CH(CH₃)-COOCH₃ oder -CH(CH₃)-COOCH₂CH₃.
R₃ bedeutet bevorzugt Ethyl oder Isopropyl und besonders bevorzugt Methyl.

R₄ bedeutet bevorzugt Methyl oder Methoxy und besonders bevorzugt Wasserstoff oder Chlor.

Acyl bedeutet bevorzugt Formyl, Acetyl oder Propionyl.
Das Verhältnis der Komponenten (A) und (B), in den erfindungsgemässen Farbstoffmischungen kann in einem breiten Rahmen variieren z.B. von 99:1 bis zu 1:99, insbesondere von 60:40 bis zu 40:60, vor allem 55:45 bis zu 45:55.
Ganz besonders bevorzugt ist eine Farbstoffmischung mit einem Verhältniss der Komponenten (A) und (B) von 50:50.

Bevorzugt ist eine Farbstoffmischung enthaltend die Farbstoffe der Formeln (1) und (2), worin R₁ Methyl, unsubstituiertes oder durch Cyano, Hydroxy, oder Acyloxy substituiertes Ethyl, Allyl, Cyclohexyl oder Benzyl, R₂ ein Rest der Formeln -CH₂-COOCH₃, -CH₂-COOCH₂CH₃, -CH(CH₃)-COOCH₃ oder -CH(CH₃)-COOCH₂CH₃, R₃ Methyl, Ethyl oder Isopropyl und R₄ Wasserstoff, Methyl, Methoxy oder Chlor sind.

Besonders bevorzugt ist eine Farbstoffmischung enthaltend
als Komponente (A) den Farbstoff der Formel 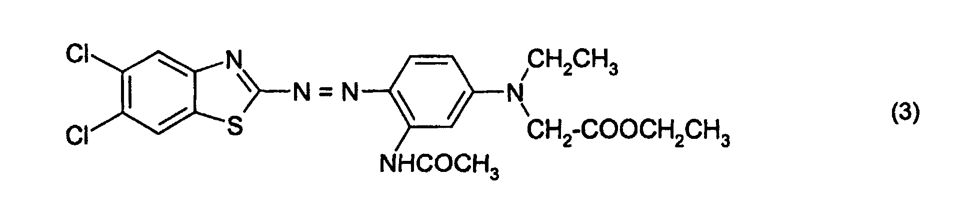 und als Komponente (B) den Farbstoff der Formel

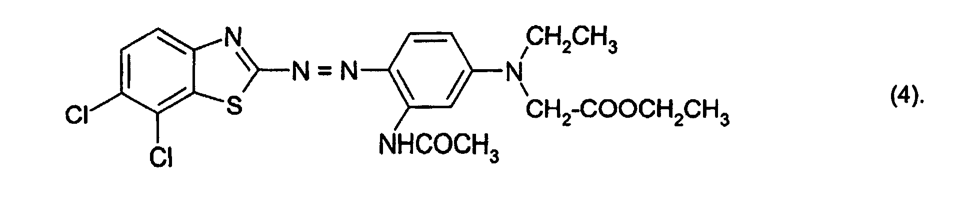

Ganz besonders bevorzugt ist eine Farbstoffmischung enthaltend die Farbstoffe der Formeln (3) und (4) in einem Verhältnis von 50:50.

Ebenfalls ganz besonders bevorzugt sind Farbstoffmischungen der Farbstoffe der Formeln (1) und (2) mit ClELAB-Koordinaten a* von 37 bis 60, insbesondere von 55 bis 58, und b* von -5 bis 25 insbesondere von -2 bis 20.

Die Bestimmung der ClELAB-Koordinaten a* und b* ist in der Deutschen Norm DIN 6174 "Farbmetrische Bestimmung von Farbabstanden bei Körperfarben nach der CIELAB-Formel" vom Januar 1979 beschrieben.
Einen weiteren Gegenstand der vorliegenden Erfindung stellt das Verfahren zur Herstellung der erfindungsgemässen Farbstoffmischungen der Formeln (1) und (2) dar.

Diese werden beispielsweise so hergestellt, indem man eine Verbindung der Formel 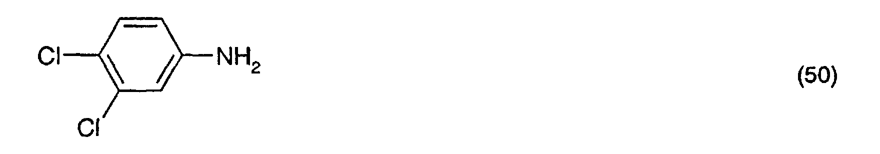 analog einem in "Dyes and Pigments, Vol. 38" auf den Seiten 57 bis 64 beschriebenen Verfahren mit Br₂ und KSCN in Essigsäure zu einem Gemisch enthaltend die Verbindungen der Formeln 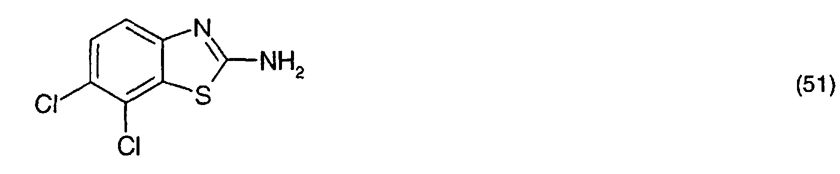 und 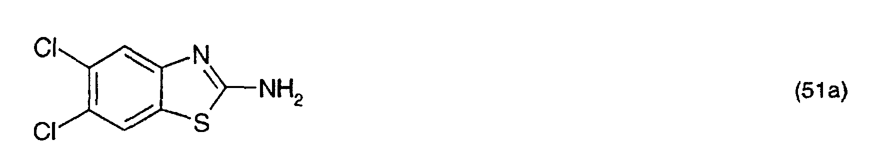 umsetzt, das entstandene Gemisch nach einem üblichen Verfahren diazotiert und anschliessend an eine Kupplungskomponente der Formel 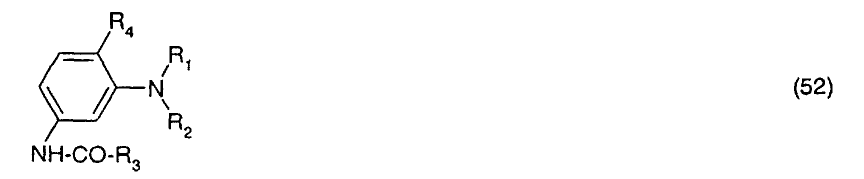 kuppelt, wobei R₁, R₂, R₃ und R₄ die vorderhand angegebenen Bedeutungen haben.

Die Diazotierung der Verbindungen der Formeln (51) und (51a) erfolgt in an sich bekannter Weise, z.B. mit Natriumnitrit in saurem, z.B. salzsaurem oder schwefelsaurem, wässrigem Medium. Die Diazotierung kann aber auch mit anderen Diazotierungsmitteln, z.B. mit Nitrosylschwefelsäure ausgeführt werden. Bei der Diazotierung kann eine zusätzliche Säure im Reaktionsmedium anwesend sein, z.B. Phosphorsäure, Schwefelsäure, Essigsäure, Propionsäure, Salzsäure oder Mischungen dieser Säuren, z.B. Mischungen aus Propionsäure und Essigsäure. Zweckmässig wird die Diazotierung bei Temperaturen von -10 bis 30°C, z.B. von -10°C bis Raumtemperatur, durchgeführt.
Die Kupplung des Gemisches der diazotierten Verbindungen der Formeln (51) und (51a) auf die Kupplungskompone der Formel (52) erfolgt ebenfalls in bekannter Weise, beispielsweise in saurem, wässrigem oder wässrig- organischem Medium, vorteilhaft bei Temperaturen von -10 bis 30°C, insbesondere unter 10°C. Als Säuren verwendet man z.B. Salzsäure, Essigsäure, Propionsäure, Schwefelsäure oder Phosphorsäure.

Die Verbindung der Formel (50) ist bekannt und kann auf an sich bekannte Art und Weise hergestellt werden.

Die Kupplungskomponente der Formel (52) kann auf an sich bekannte Art und Weise hergestellt werden, indem man z.B. eine Verbindung der Formel 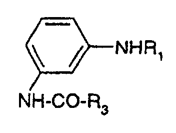 , worin R₁ und R₃ die oben angegebenen Bedeutungen haben, mit CICH₂COOCH₃, CICH₂COOC₂H₅, CICH(CH₃)COOCH₃ oder CICH(CH₃)COOC₂H₅ in Gegenwart von Natriumcarbonat bei erhöhter Temperatur umsetzt.

Die erfindungsgemässen Farbstoffmischungen können auch durch einfaches Zusammenmischen der Farbstoffe der Formeln (1) und (2) hergestellt werden.

Die erfindungsgemässen Farbstoffmischungen können als Farbstoffe zum Färben und Bedrucken von halbsynthetischen und insbesondere synthetischen hydrophoben Fasermaterialien, vor allem Textilmaterialien, verwendet werden. Textilmaterialien aus Mischgeweben, die derartige halbsynthetische bzw. synthetische hydrophobe Textilmaterialien enthalten, können ebenfalls mit Hilfe der erfindungsgemässen Verbindungen gefärbt oder bedruckt werden.

Als halbsynthetische Textilmaterialien kommen vor allem Cellulose 2½-Acetat und Cellulosetriacetat in Frage.

Synthetische hydrophobe Textilmaterialien bestehen vor allem aus linearen, aromatischen Polyestern, beispielsweise solchen aus Terephthalsäure und Glykolen, besonders Ethylenglykol oder Kondensationsprodukten aus Terephthalsäure und 1,4-Bis-(hydroxymethyl)-cyclohexan; aus Polycarbonaten, z.B. solchen aus α,α-Dimethyl-4,4-dihydroxy-diphenylmethan und Phosgen, aus Fasern auf Polyvinylchlorid- sowie Polyamid-Basis.

Die Applikation der erfindungsgemässen Verbindungen auf die Textilmaterialien erfolgt nach bekannten Färbeverfahren. Beispielsweise färbt man Polyesterfasermaterialien im Ausziehverfahren aus wässriger Dispersion in Gegenwart von üblichen anionischen oder nicht-ionischen Dispergiermitteln und gegebenenfalls üblichen Quellmitteln (Carrier) bei Temperaturen zwischen 80 und 140°C. Cellulose-2½ -acetat färbt man vorzugsweise zwischen ungefähr 65 bis 85°C und Cellulosetriacetat bei Temperaturen bis zu 115°C.

Die erfindungsgemässen Farbstoffmischungen färben im Färbebad gleichzeitig anwesende Wolle und Baumwolle nicht oder nur wenig an (sehr gute Reserve), so dass sie auch gut zum Färben von Polyester/Wolle- und Polyester/Cellulosefaser-Mischgeweben verwendet werden können.

Die erfindungsgemässen Farbstoffmischungen eignen sich zum Färben nach dem Thermosolverfahren, im Auszieh- und Continueverfahren und für Druckverfahren. Das Ausziehverfahren ist bevorzugt. Das Flottenverhältnis ist von den apparativen Gegebenheiten, vom Substrat und der Aufmachungsform abhängig. Es kann jedoch innerhalb eines weiten Bereiches gewählt werden, z.B. 1:4 bis 1:100, liegt aber vorzugsweise zwischen 1:6 bis 1:25.

Das genannte Textilmaterial kann dabei in den verschiedenen Verarbeitungsformen vorliegen, wie z.B. als Faser, Faden oder Vlies, als Gewebe oder Gewirke.

Es ist vorteilhaft, die erfindungsgemässen Farbstoffmischungen vor ihrer Verwendung in ein Farbstoffpräparat zu überführen. Hierzu wird die Farbstoffmischung vermahlen, so dass ihre Teilchengrösse im Mittel zwischen 0,1 und 10 Mikron beträgt. Das Vermahlen kann in Gegenwart von Dispergiermitteln erfolgen. Beispielsweise wird die getrocknete Farbstoffmischung mit einem Dispergiermittel gemahlen oder in Pastenform mit einem Dispergiermittel geknetet und hierauf im Vakuum oder durch Zerstäuben getrocknet. Mit den so erhaltenen Präparaten kann man nach Zugabe von Wasser Druckpasten und Färbebäder herstellen. Beim Bedrucken wird man die üblichen Verdickungsmittel verwenden, z.B. modifizierte oder nichtmodifizierte natürliche Produkte, beispielsweise Alginate, British-Gummi, Gummi arabicum, Kristallgummi, Johannisbrotkernmehl, Tragant, Carboxymethylcellulose, Hydroxyethylcellulose, Stärke oder synthetische Produkte, beispielsweise Polyacrylamide, Polyacrylsäure oder deren Copolymere oder Polyvinylalkohole.
Die erfindungsgemässen Farbstoffmischungen verleihen den genannten Materialien, vor allem dem Polyestermaterial, egale Farbtöne von sehr guten Gebrauchsechtheiten, wie vor allem gute Lichtechtheit, Thermofixier-, Plissier-, Chlor- und Nassechtheit wie Wasser-Schweiss- und Waschechtheit; die Ausfärbungen sind ferner gekennzeichnet durch eine gute Reibechtheitechtheit.

Die erfindungsgemässen Farbstoffmischungen können auch gut verwendet werden zur Herstellung von Mischnuancen zusammen mit anderen Farbstoffen.
Insbesondere können die erfindungsgemässen Farbstoffmischungen als rote Komponente in einer Trichromie Färbe- oder Drucktechnik eingesetzt werden.

Ausserdem eignen sich die erfindungsgemässen Farbstoffmischungen auch gut zum Färben von hydrophobem Textilmaterial aus überkritischem CO₂.

Die vorstehend genannte Verwendung der erfindungsgemässen Farbstoffmischungen stellt ebenso einen Gegenstand der vorliegenden Erfindung dar wie ein Verfahren zum Färben oder Bedrucken von halbsynthetischem oder synthetischem hydrophobem Fasermaterial, insbesondere Textilmaterial, das darin besteht, die erfindungsgemässe Farbstoffmischung auf das genannte Material aufzubringen oder sie in dieses einzuarbeiten. Das genannte hydrophobe Fasermaterial ist vorzugsweise textiles Polyestermaterial. Weitere Substrate, die durch das erfindungsgemässe Verfahren behandelt werden können, sowie bevorzugte Verfahrensbedingungen sind vorstehend bei der näheren Erläuterung der Verwendung der erfindungsgemässen Farbstoffmischungen zu finden.

Ein weiterer Gegenstand der Erfindung ist das durch das genannte Verfahren gefärbte bzw. bedruckte hydrophobe Fasermaterial, vorzugsweise Polyester-Textilmaterial.

Die erfindungsgemässen Farbstoffmischungen eignen sich ausserdem für moderne Aufzeichnungsverfahren, wie z.B. Thermotransfer-Printing.
Die nachfolgenden Beispiele dienen der Veranschaulichung der Erfindung. Darin sind, sofern nicht anders angegeben, die Teile Gewichtsteile und die Prozente Gewichtsprozente. Die Temperaturen sind in Celsiusgraden angegeben. Die Beziehung zwischen Gewichtsteilen und Volumenteilen ist dieselbe wie zwischen Gramm und Kubikzentimeter.

### Beispiel 1:

In einem Reaktionsgefäss werden 40,0 ml wasserfreier Essigsäure vorgelegt. Dazu werden 5,4 Gewichtsteile einer 50:50 Mischung von 2-Amino-5,6-dichlor-benzthiazol und 2-Amino-6,7-dichlor-benzthiazol bei Raumtemperatur innerhalb von 3 Minuten zugegeben, 5 Minuten verrührt und mit 0,6 ml einer 98%-igen Schwefelsäure versetzt. Anschliessend werden zu der Reaktionsmischung innerhalb von 15 Minuten 4,0 ml einer 40%-igen Nitrosylschwefelsäure zugetropft. Nach der beendeten Zugabe wird die Reaktionsmischung 2 Stunden bei einer Temperatur von 10-15°C ausgerührt.
Die entstandene Diazolösung wird danach innerhalb 30 Minuten zu einer Lösung aus 5,6 Gewichtsteilen der Kupplungskomponente der Formel 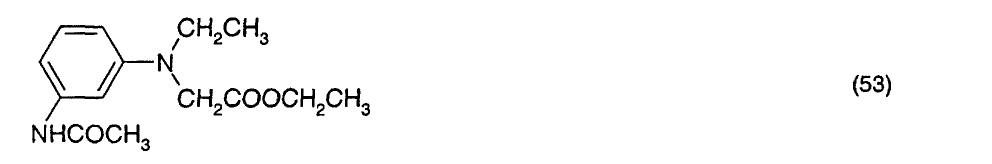 gelöst in 100 Gewichtsteilen wasserfreier Essigsäure zugetropft, wobei die Reaktionstemperatur mittels Zugabe von 400 Gewichtsteilen Eis bei 0-15°C gehalten wird. Nach beendeter Zugabe der Diazolösung wird das Reaktionsgemisch 40 Minuten nachgerührt. Der ausgefallene Farbstoff wird abgenutscht, mit Wasser gewaschen und getrocknet. Man erhält eine rotbraune 50:50-Farbstoffmischung der Farbstoffe der Formeln 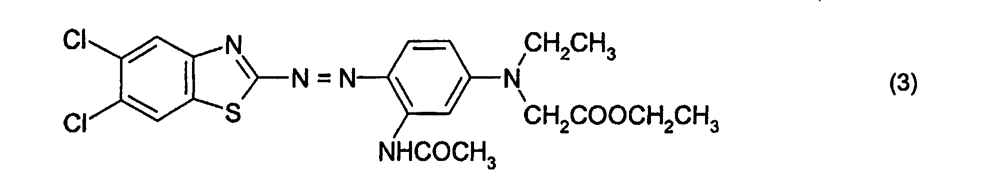 und

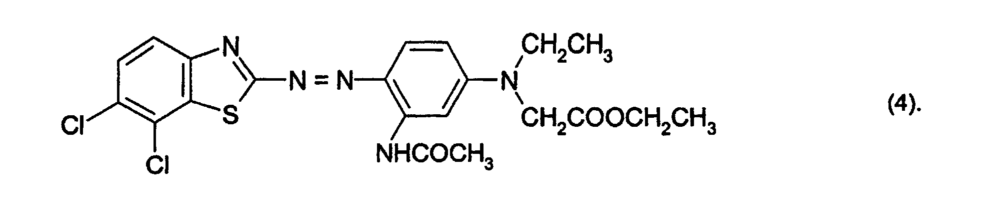

### Beispiele 2-17:

Verfährt man wie in Beispiel 1 beschrieben, verwendet aber anstatt 5,6 Gewichtsteile der Kupplungskomponente der Formel (53) die equimolare Menge einer der in der Tabelle 1 angegebenen Kupplungskomponenten, so erhält man die in der Tabelle 1 aufgeführten Farbstoffmischungen.

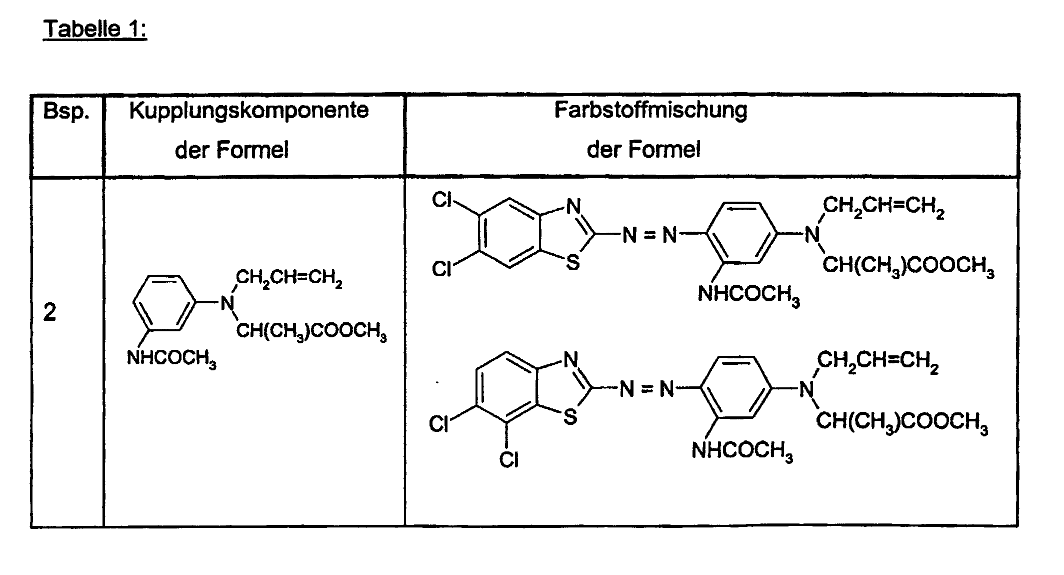

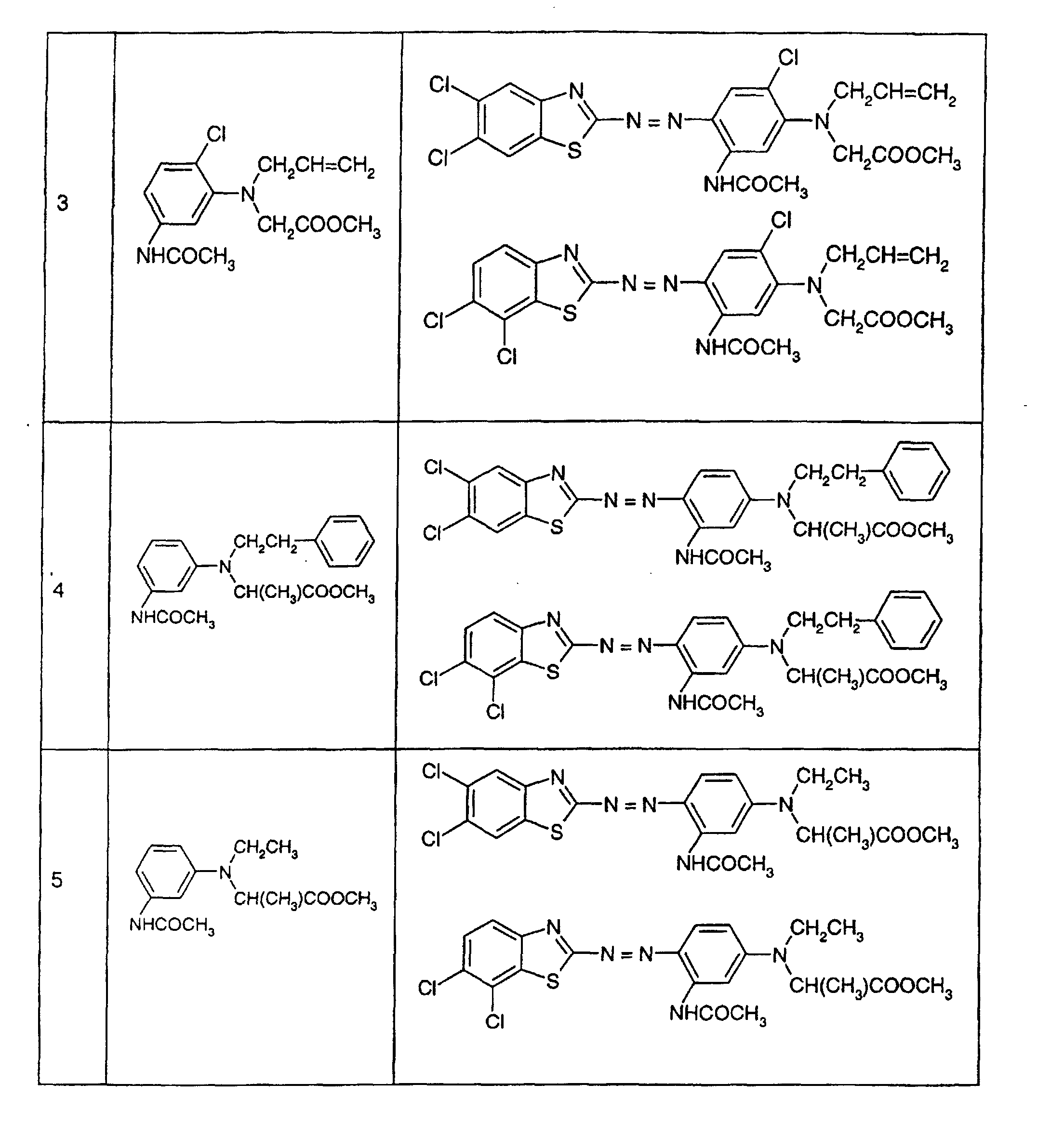

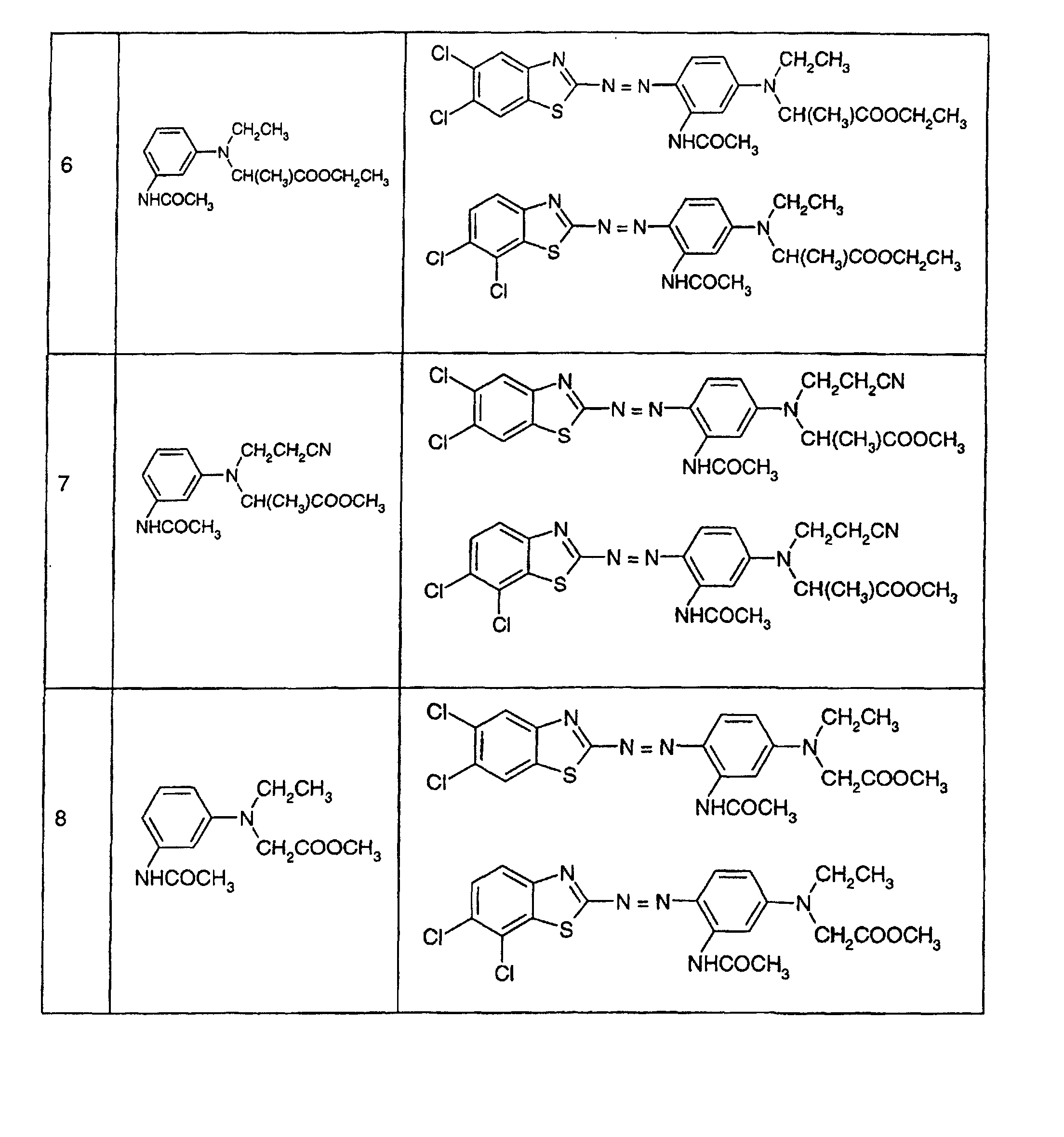

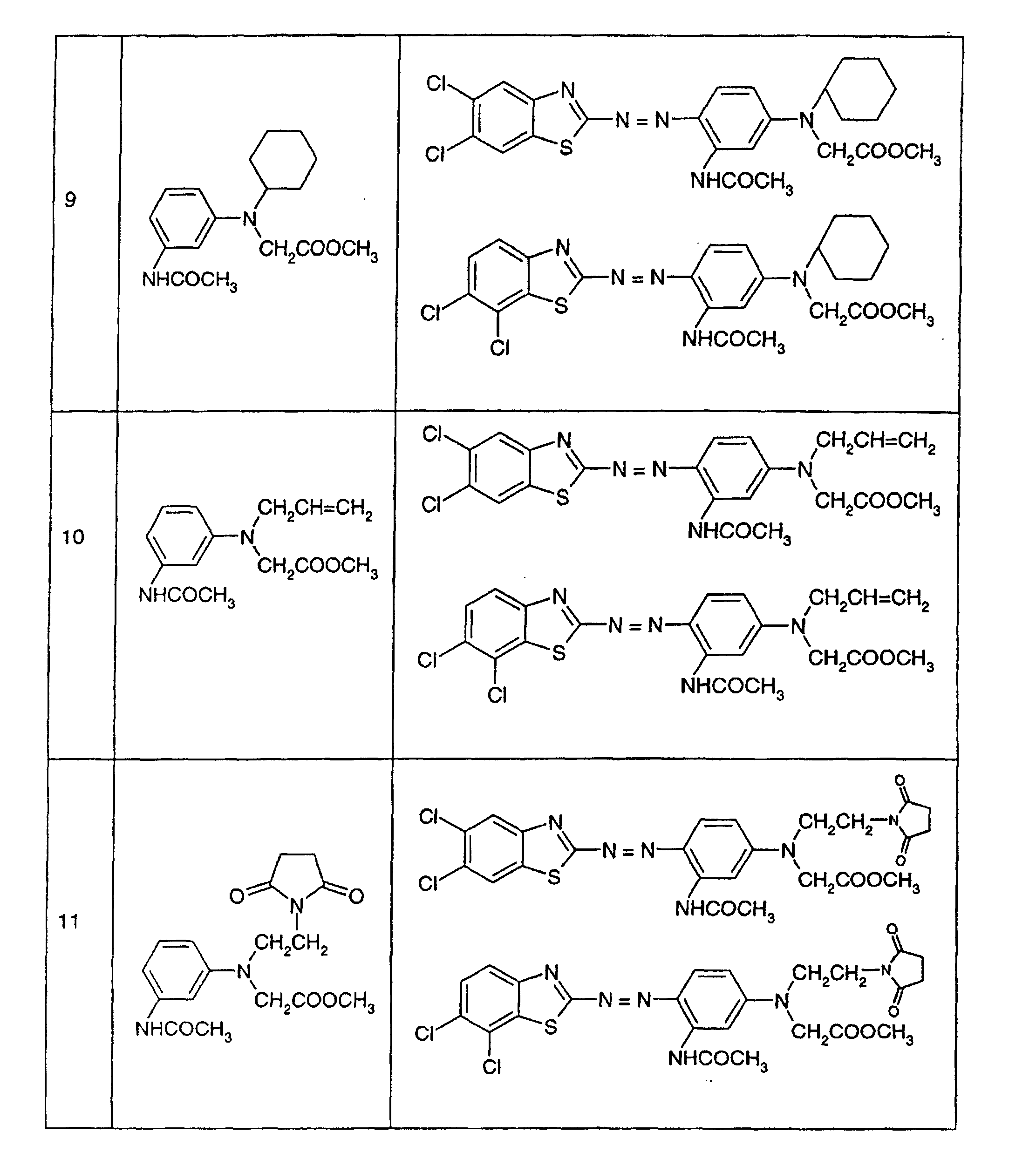

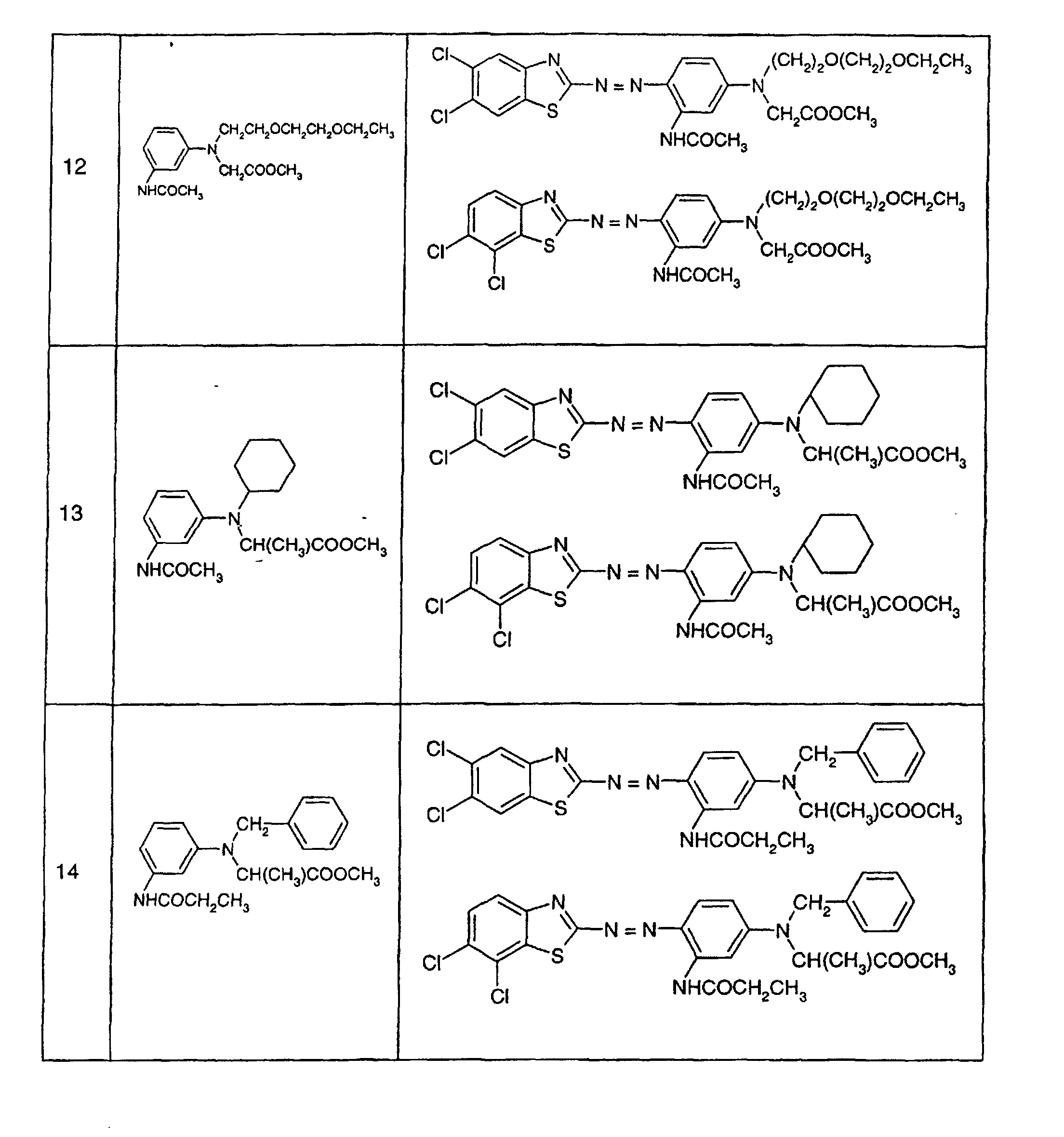

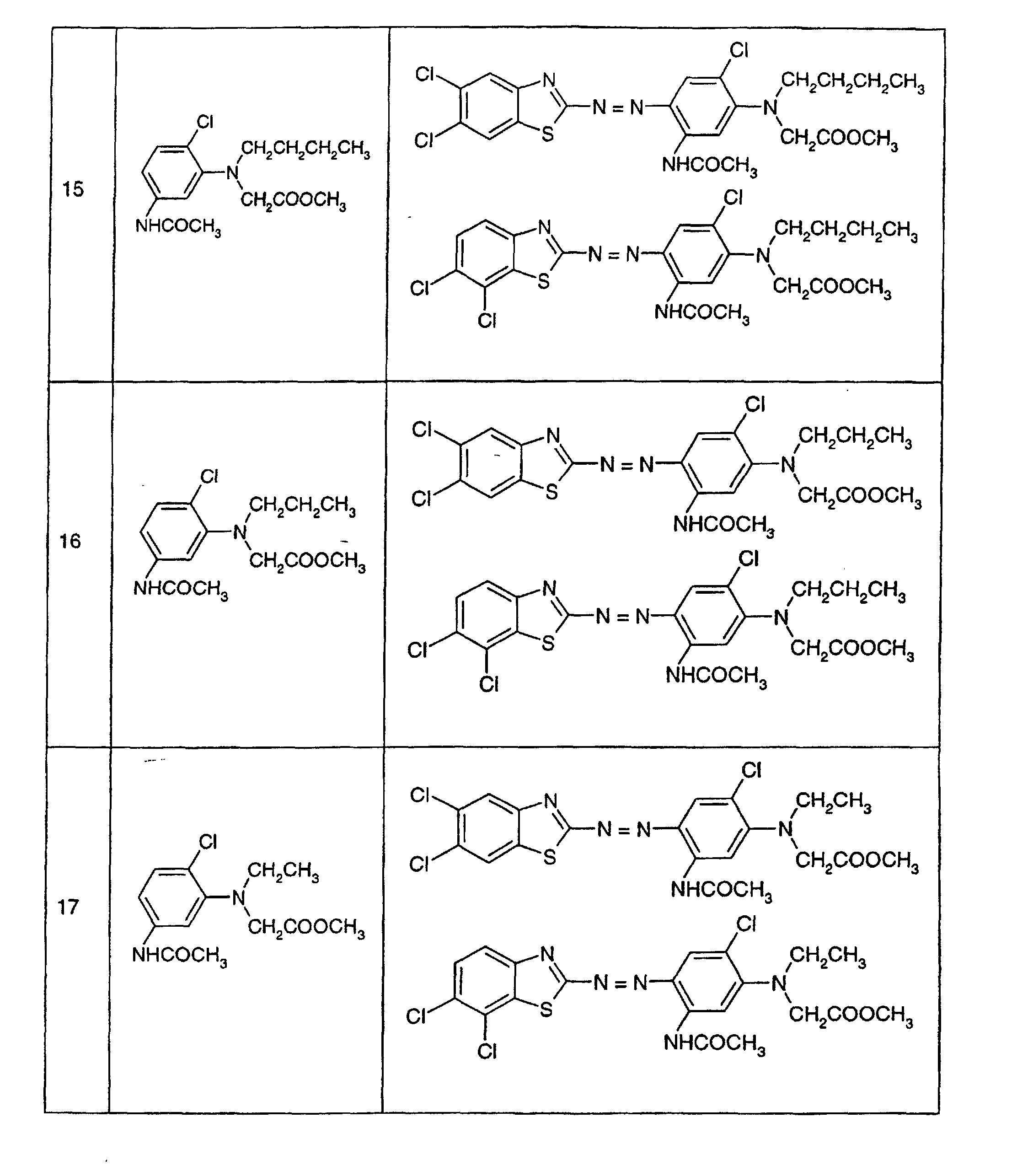

## Patentansprüche

1. Farbstoffmischung enthaltend
als Komponente (A) mindestens einen Farbstoff der Formel 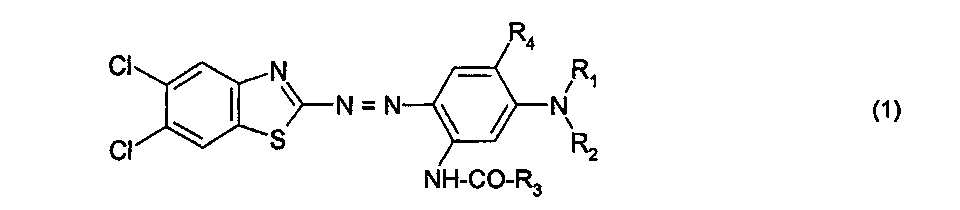 und
als Komponente (B) mindestens einen Farbstoff der Formel 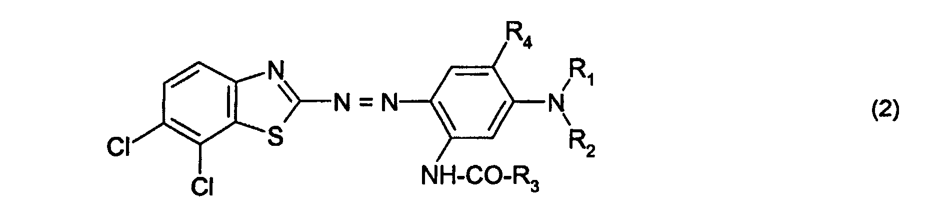 worin R₁ unsubstituiertes oder durch Hydroxy, Cyano, Phenyl, Acyloxy oder 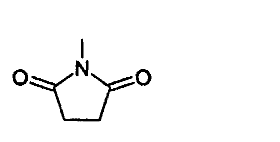 substituiertes C₁-C₆-Alkyl ist, wobei die Alkylkette ab C₃ ein- oder mehrfach mit Sauerstoff unterbrochen werden kann, oder Allyl, ist, R₂ ein C₁-C₄-Alkyl, welches durch C₁-C₄-Alkoxycarbonyl substituiert ist, R₃ C₁-C₄-Alkyl ist, und R₄ Wasserstoff, Halogen, C₁-C₄-Alkyl oder C₁-C₄-Alkoxy ist.

2. Farbstoffmischung gemäss Anspruch 1, **dadurch gekennzeichnet, dass** R₁ Methyl, unsubstituiertes oder durch Cyano, Hydroxy, oder Acyloxy substituiertes Ethyl, Allyl, Cyclohexyl oder Benzyl, R₂ ein Rest der Formeln -CH₂-COOCH₃, -CH₂COOCH₂CH₃, -CH(CH₃)-COOCH₃ oder -CH(CH₃)-COOCH₂CH₃, R₃ Methyl, Ethyl oder Isopropyl und R₄ Wasserstoff, Methyl, Methoxy oder Chlor sind.

3. Farbstoffmischung gemäss Anspruch 2, **dadurch gekennzeichnet, dass** R₃ Methyl und R₄ Wasserstoff oder Chlor sind.

4. Farbstoffmischung gemäss Anspruch 2, **dadurch gekennzeichnet, dass** R₁ Ethyl, R₂ -CH₂-COOCH₂CH₃, R₃ Methyl und R₄ Wasserstoff sind.

5. Verfahren zur Herstellung einer Farbstoffmischung gemäss Anspruch 1, **dadurch gekennzeichnet, dass** man eine Verbindung der Formel 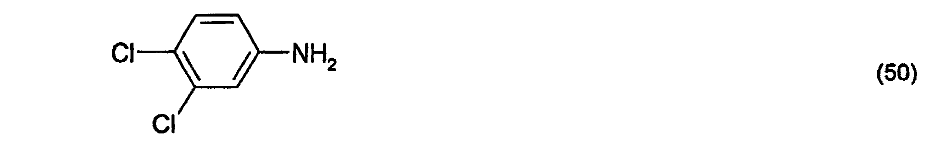 analog einem in "Dyes and Pigments, Vol. 38" auf den Seiten 57 bis 64 beschriebenen Verfahren mit Br₂ und KSCN in Essigsäure zu einem Gemisch enthaltend die Verbindungen der Formeln 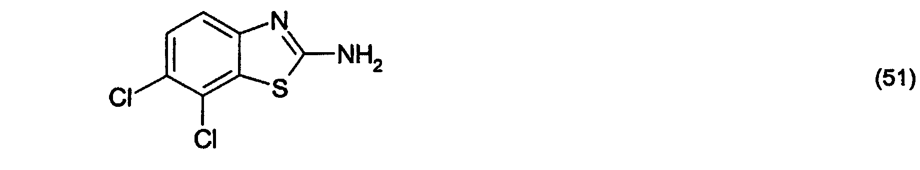 und 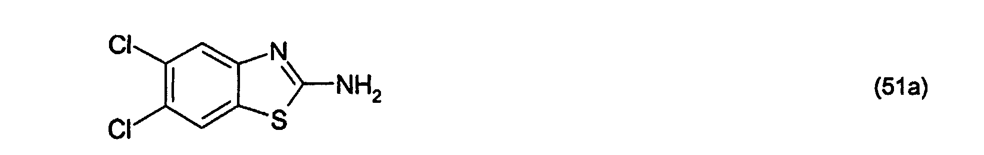 umsetzt, das entstandene Gemisch nach einem üblichen Verfahren diazotiert und anschliessend an eine Kupplungskomponente der Formel 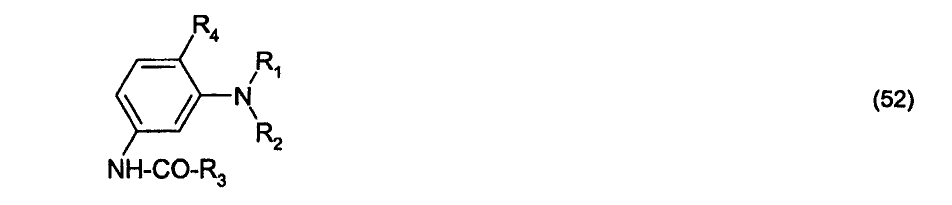 kuppelt, wobei R₁, R₂, R₃ und R₄ die in Anspruch 1 angegebenen Bedeutungen haben.

6. Verwendung der Farbstoffmischung gemäss Anspruch 1 zum Färben oder Bedrucken von halbsynthetischen oder synthetischen hydrophoben Fasermaterialien.

7. Die mit der Farbstoffmischung gemäss Anspruch 1 gefärbten oder bedruckten halbsynthetischen oder synthetischen hydrophoben Fasermaterialien.

## Claims

1. A dye mixture comprising
as component (A) at least one dye of formula 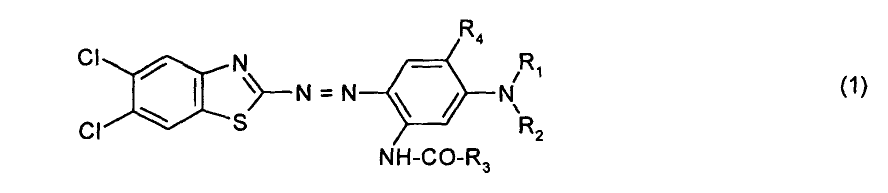 and
as component (B) at least one dye of formula 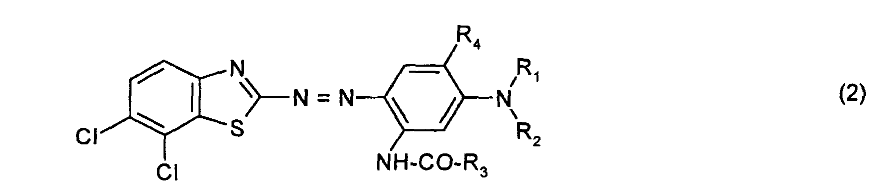 wherein R₁ is C₁-C₆alkyl unsubstituted or substituted by hydroxy, cyano, phenyl, acyloxy or by 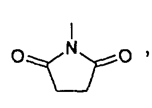 it being possible for the alkyl chain from C₃ to be interrupted one or more times by oxygen, or is allyl, R₂ is C₁-C₄alkyl substituted by C₁-C₄alkoxycarbonyl, R₃ is C₁-C₄alkyl, and R₄ is hydrogen, halogen, C₁-C₄alkyl or C₁-C₄alkoxy.

2. A dye mixture according to claim 1, wherein R₁ is methyl, unsubstituted or cyano-, hydroxy- or acyloxy-substituted ethyl, allyl, cyclohexyl or benzyl, R₂ is a radical of formula -CH₂-COOCH₃, -CH₂-COOCH₂CH₃, -CH(CH₃)-COOCH₃ or -CH(CH₃)-COOCH₂CH₃, R₃ is methyl, ethyl or isopropyl, and R₄ is hydrogen, methyl, methoxy or chlorine.

3. A dye mixture according to claim 2, wherein R₃ is methyl and R₄ is hydrogen or chlorine.

4. A dye mixture according to claim 2, wherein R₁ is ethyl, R₂ is -CH₂-COOCH₂CH₃, R₃ is methyl, and R₄ is hydrogen.

5. A process for the preparation of a dye mixture according to claim 1, wherein a compound of formula 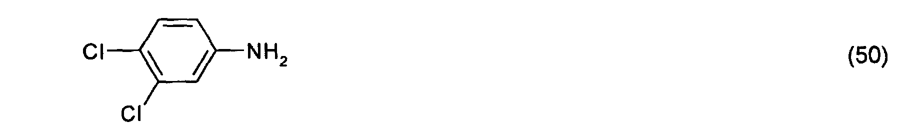 is reacted with Br₂ and KSCN in acetic acid analogously to a procedure described on pages 57 to 64 of "Dyes and Pigments", Vol. 38 to form a mixture comprising the compounds of formulae 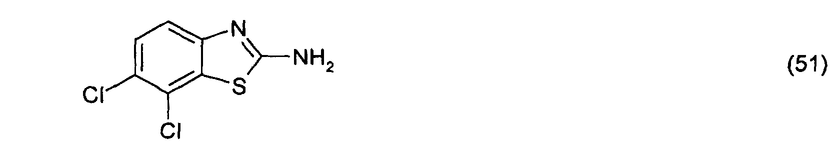 and 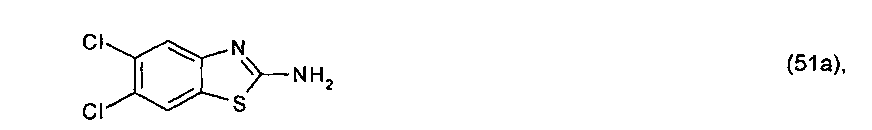 the resulting mixture is diazotised in accordance with a customary procedure and then coupled to a coupling component of formula 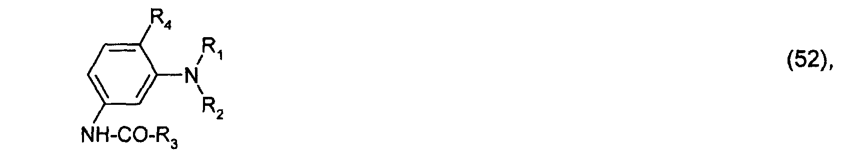 R₁, R₂, R₃ and R₄ being as defined in claim 1.

6. The use of a dye mixture according to claim 1 in the dyeing or printing of semi-synthetic or synthetic hydrophobic fibre materials.

7. A semi-synthetic or synthetic hydrophobic fibre material dyed or printed with a dye mixture according to claim 1.

## Revendications

1. Mélange de colorants renfermant
en tant que composant (A) au moins un colorant de formule 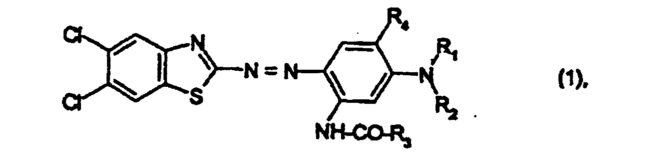 et en tant que composant (B) au moins un colorant de formule 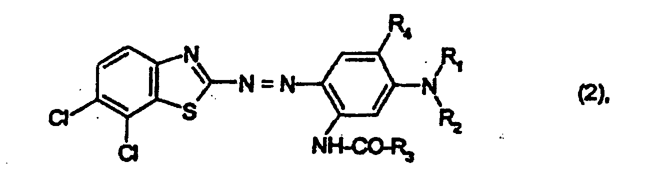 où R₁ représente un groupe alkyle en C₁-C₆ non substitué ou. substitué par des substituants hydroxy, cyano, phényle, acyloxy ou 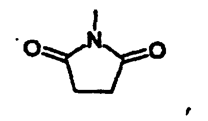 la chaîne alkyle à partir de C₃ pouvant être interrompue une ou plusieurs fois par un atome d'oxygène, ou représente un groupe allyle,
R₂ représente un groupe alkyle en C₁-C₄, qui est substitué par un substituant (alkoxy en C₁-C₄)-carbonyle,
R₃ représente un groupe alkyle en C₁-C₄ et
R₄ représente un atome d'hydrogène, un atome d'halogène, un groupe alkyle en C₁-C₄ et alkoxy en C₁-C₄.

2. Mélange de colorants selon la revendication 1, **caractérisé en ce que** R₁ représente un groupe méthyle, un groupe benzyle, cycloyhexyle, allyle ou éthyle non substitué ou substitué par des substituants cyano, hydroxy ou acyloxy, R₂ représente un reste de formules -CH₂-COOCH₃, -CH₂-COOCH₂CH₃, -CH(CH₃)-COOCH₃ ou -CH(CH₃)-COOCH₂CH₃, R₃ représente un groupe méthyle, éthyle ou isopropyle et R₄ représente un atome d'hydrogène, des groupes méthyle, méthoxy ou un atome de chlore.

3. Mélange de colorants selon la revendication 2, **caractérisé en ce que** R₃ représente un groupe méthyle et R₄ un atome d'hydrogène ou un atome de chlore.

4. Mélange de colorants selon la revendication 2, **caractérisé en ce que** R₁ représente un groupe éthyle, R₂ représente un groupe -CH₂-COOCH₂CH₃, R₃ représente un groupe méthyle et R₄ un atome d'hydrogène.

5. Procédé pour la préparation d'un mélange de colorants selon la revendication 1, **caractérisé en ce qu'**on fait réagir un composé de formule 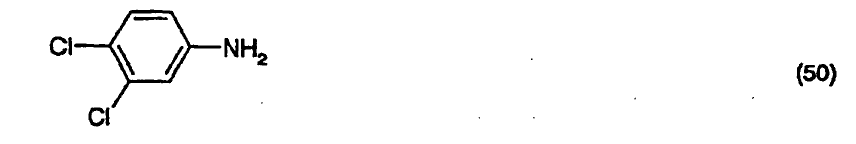 de façon analogue à un procédé décrit par "Dyes and Pigments, Vol. 38" aux pages 57 à 64, sur Br₂ et KSCN dans l'acide acétique pour donner un mélange renfermant les composés de formules 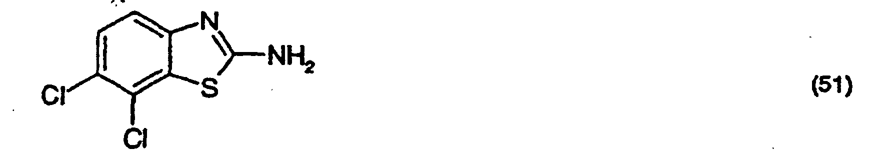 et 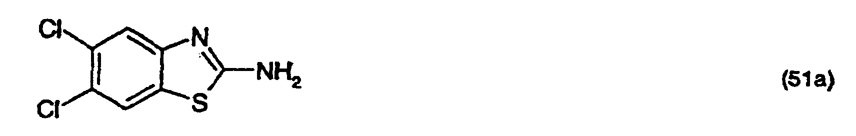 on diazote le mélange obtenu selon un procédé de diazotation usuel et ensuite on copule sur un composant de copulation de formule 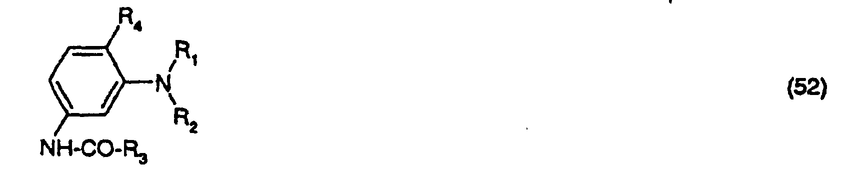 R_{1,} R₂, R₃ et R₄ possédant les significations données à la revendication 1.

6. Utilisation du mélange de colorants selon la revendication 1 pour la teinture ou l'impression de matières fibreuses hydrophobes semi-synthétiques ou synthétiques.

7. Matières fibreuses hydrophobes semi-synthétiques ou synthétiques teintes ou imprimées par le mélange de colorants selon la revendication 1.
